# FASCICULE DE BREVET EUROPEEN

(11) **EP 2 550 136 B1**
(45) Date de publication et mention de la délivrance du brevet: **25.12.2013**
(21) Numéro de dépôt: 11717297.3
(22) Date de dépôt: 24.03.2011
(51) Int. Cl.: B26D 7/27, B26F 1/40, B29C 65/08, B29C 65/74, B29C 65/16

(54) **FIXATION D'UN SUPPORT D'ÉQUIPEMENT SUR UNE PEAU EN MATIÈRE PLASTIQUE D'UNE PIÈCE DE CARROSSERIE DE VÉHICULE AUTOMOBILE**
VORRICHTUNG FÜR DIE BEFESTIGUNG EINER TEILHALTERUNG AUF EINE POLYMERHAUT EINES AUTOKARROSSERIETEILS
FIXTURE FOR AN EQUIPMENT SUPPORT ON A SKIN MADE OF POLYMERIC MATERIAL OF A PART FOR AN AUTOMOTIVE BODY

(30) Priorité: 25.03.2010 FR 1052186
(43) Date de publication de la demande: 30.01.2013
(73) Titulaire: Compagnie Plastic Omnium, 69007 Lyon (FR)
(72) Inventeur: TRESSE, David, F-70210 Polaincourt (FR); VIARD, Claude, F-01150 Saint Sorlin En Bugey (FR); FILISETTI, Jean-Luc, F-01120 Dagneux (FR)
(74) Mandataire: Remy, Vincent Noel Paul
(86) Numéro de dépôt international: PCT/FR2011/050635
(87) Numéro de publication internationale: WO 2011/117550

(56) Documents cités:
- EP-A1- 1 798 019
- EP-A2- 1 586 427
- DE-A1- 19 750 075
- US-A- 3 716 438

## Description

La présente invention concerne la fixation d'un support d'équipement sur une peau en matière plastique d'une pièce de carrosserie de véhicule automobile, et en particulier pour la fixation d'un support de capteur à ultrasons pour l'aide au stationnement ou d'un lave-projecteur, voir EP-A-1798019, regardé comme étant l'état de la technique le plus proche.

Dans la présente description, on entend par « peau » d'une pièce de carrosserie la paroi de cette pièce qui présente une face visible de l'extérieur du véhicule une fois montée sur ledit véhicule. Il est courant de parler de peau de pare-chocs, mais l'invention concerne aussi des peaux d'ailes ou des jupes, une jupe étant une paroi prolongeant un pare-chocs vers le bas, à l'avant ou à l'arrière d'un véhicule.

Des capteurs à ultrasons sont couramment utilisés pour constituer des systèmes d'aide au stationnement, souvent désignés par l'acronyme PDC (pour « Park Distance Control »). Dans la suite de la description, on désignera par le terme « capteur PDC » de tels capteurs à ultrasons.

Les capteurs PDC se montent en général par groupe de trois, quatre ou six sur une peau de pare-chocs ou sur une jupe, en étant maintenus du côté intérieur du pare-chocs par un support, désigné support PDC, solidarisé à la face intérieure de la peau de pare-choc. Le support maintient le capteur PDC en regard d'un orifice ménagé dans la peau du pare-chocs.

Dans l'état de la technique, le montage d'un capteur PDC sur une peau de pare-chocs nécessite deux opérations distinctes, à savoir, tout d'abord le poinçonnage de la peau pour former un orifice, puis la fixation du support sur la peau en regard de cet orifice. Ces deux opérations sont réalisées sur deux postes distincts, entre lesquels il est nécessaire de transférer la peau de pare-chocs en prenant bien garde de positionner convenablement la peau de pare-chocs sur le deuxième poste, ce qui n'est pas aisé car la localisation géométrique de l'orifice par rapport à un point de référence prédéterminé du pare-chocs risque d'être perdue du fait du transfert.

Il convient de préciser que la formation des orifices sur une peau de pare-chocs n'est en général pas effectuée lors de la fabrication de la peau car la présence de capteurs PDC est une option que l'on ne retrouve pas sur toutes les versions commerciales du véhicule. Les peaux de pare-chocs sont donc toutes fabriquées selon la version de base et l'ajout des capteurs PDC est réalisé dans un second temps, le plus souvent après peinture.

Les mêmes principes s'appliquent aux lave-projecteurs intégrés aux peaux de pare-chocs.

La présente invention propose un outillage qui améliore les conditions dans lesquelles des capteurs PDC ou des lave-projecteurs peuvent être ajoutés sur une

La présente invention a pour objet un outillage permettant la fixation d'un support d'équipement sur une peau en matière plastique d'une pièce de carrosserie de véhicule automobile, l'équipement étant du type devant être maintenu, par le support fixé à la peau, en regard d'un orifice ménagé à cet effet dans ladite peau, l'outillage comprenant un poinçon, un dévêtisseur dans lequel le poinçon peut coulisser et une matrice dans laquelle le poinçon peut pénétrer pour découper la peau et former l'orifice. L'outillage selon l'invention est caractérisé en ce que :
- il comprend un porte-support, c'est-à-dire un organe conformé pour recevoir le support, engagé autour dudit porte-support, et pour le maintenir, du seul fait de cet engagement, dans sa position définitive par rapport à la peau,
- la matrice est une extrémité du porte-support en regard du poinçon,
- l'outillage comprend des moyens de fixation pour fixer le support à la peau lorsqu'il est engagé sur le porte-support.

Grâce à l'invention, le positionnement des pièces est grandement amélioré car le référentiel par rapport à l'orifice formé lors du poinçonnage n'est pas perdu par transfert de la pièce d'un poste à un autre pour la fixation du support à la peau.

L'ordre des opérations entre poinçonnage et fixation peut être quelconque.

L'invention procure des avantages économiques pour plusieurs raisons : réduction de la surface utilisée par la machine portant l'outillage ; réduction du temps de cycle due à la suppression du temps de transfert ; amélioration de qualité tant par la conservation de la référence géométrique que par l'absence de détérioration de la peau de pare-chocs lors de son transfert, avantage qui est d'autant plus marqué si la pièce de carrosserie est déjà peinte.

Dans un mode de réalisation particulier de l'invention, la matrice présente, dans un plan perpendiculaire à la direction de poinçonnage, une épaisseur de paroi comprise entre 1 et 8 mm, et de préférence entre 3 et 6 mm.

Dans un mode de réalisation particulier de l'invention, les moyens de fixation du support à la peau comprennent une sonotrode de soudure à ultrasons et une enclume, la sonotrode étant voisine de la matrice, tandis que l'enclume est solidaire du dévêtisseur, voire est confondue avec le dévêtisseur.

Dans ce cas, le support engagé sur le porte-support peut être soudé à la peau de pare-chocs par ultrasons en étant pris en sandwich, avec la peau de pare-chocs, entre la sonotrode et l'enclume.

Dans un autre mode de réalisation, les moyens de fixation comprennent une ou plusieurs agrafes, une ou plusieurs vis, un ou plusieurs clips, ou encore un film adhésif pelable.

L'outillage selon l'invention peut notamment être utilisé pour des support PDC, comme cela vient d'être expliqué, mais également pour des lave-projecteurs.

L'invention a également pour objet un procédé de fixation d'un support d'équipement sur une peau en matière plastique d'une pièce de carrosserie de véhicule automobile, l'équipement étant du type devant être maintenu, par le support fixé à la peau, en regard d'un orifice ménagé à cet effet dans ladite peau, le procédé consistant à utiliser un poinçon, un dévêtisseur dans lequel le poinçon peut coulisser et une matrice dans laquelle le poinçon peut pénétrer pour découper la peau et former l'orifice. Ce procédé est caractérisé en ce qu'il consiste à exécuter les étapes suivantes :
a) positionner et maintenir le support dans sa position définitive par rapport à la peau,
b) réaliser l'orifice par poinçonnage de la peau après avoir exécuté l'étape a),
c) fixer le support à la peau après avoir exécuté l'étape a),
les étapes b) et c) étant réalisées concomitamment ou successivement, dans un ordre quelconque.

Selon l'invention, la mise en oeuvre de ce procédé n'implique aucun déplacement de la pièce de carrosserie entre les étapes b) et c), ni aucun changement d'outillage autour de la pièce de carrosserie.

Afin de mieux faire comprendre l'invention, on va en décrire maintenant un mode de réalisation donné à titre d'exemple non limitatif de la portée de l'invention en référence aux dessins annexés dans lesquels :
- la figure 1 représente un outillage en position d'attente,
- la figure 2 représente l'outillage avec un support en position d'attente,
- la figure 3 représente l'outillage, le support et une portion de peau de pare-chocs juste avant son poinçonnage,
- la figure 4 représente les mêmes éléments pendant le poinçonnage,
- la figure 5 représente les mêmes éléments pendant la soudure à ultrasons du support sur la peau,
- la figure 6 représente les mêmes éléments en fin de cycle.

Les figures fournissent une représentation schématique et simplifiée des différents éléments relatifs à l'invention, sur la base de figures géométriques simples. Ces figures géométriques simples ne doivent pas être considérées comme limitant la portée de l'invention.

Sur ces figures, on voit qu'un support 1 de matrice supporte un organe 2, qui est ici tubulaire, dont la paroi 3 fait environ 3 millimètres d'épaisseur. Cet organe 2 s'étend axialement sur une hauteur de 30 mm, qui est également la longueur du capteur PDC devant être fixé grâce à l'outillage représenté. L'organe 2 constitue un porte-support au sens de l'invention.

Le support 1 est traversé par les deux branches 4 d'une sonotrode 5 en U de forme bien connue, laquelle est reliée à un générateur d'ultrasons (non représenté)

L'organe 2 est d'un seul tenant mais peut être décomposé, d'un point de vue fonctionnel, en deux parties, à savoir un corps 2a et une matrice 2b.

Le porte-support 2, corps 2a et matrice 2b inclus, est conformé pour recevoir un support PDC (décrit plus loin) de capteur PDC (non représenté), engagé autour dudit porte-support 2, et pour le maintenir dans cette position, du seul fait de cet engagement.

La matrice 2b s'étend sur une hauteur de quelques millimètres, juste suffisante pour assurer le poinçonnage de la peau par cisaillement avec un poinçon 6, situé en regard de la matrice 2b.

Le poinçon 6 et son dévêtisseur 7 sont positionnés en attente, à distance de la matrice mais coaxialement à celle-ci, selon un axe X.

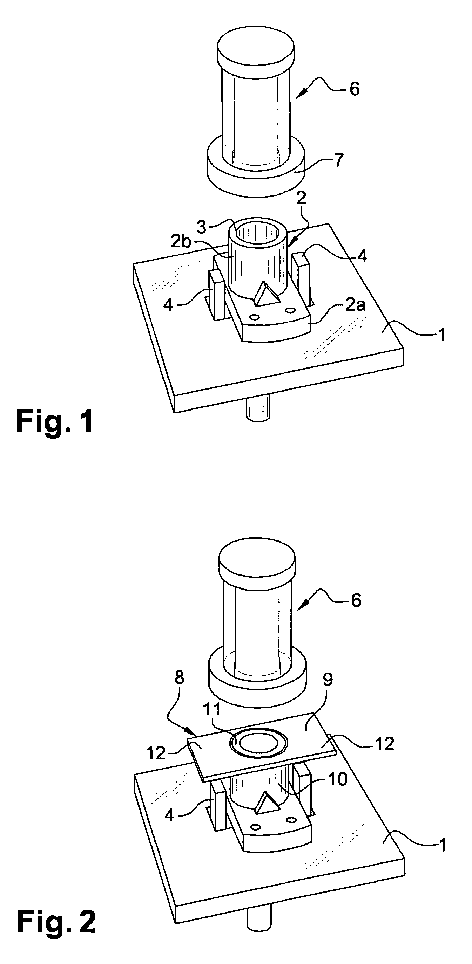

Un support PDC 8 comporte une partie 9 de fixation à une peau de pare-chocs, représentée plane sur le dessin mais en réalité galbée comme la peau du pare-chocs, et une partie tubulaire 10 de maintien d'un capteur PDC. Ce support PDC 8 est engagé, comme on le voit dans la figure 2, autour du porte-support 2. La longueur du porte-support 2 est telle que le support PDC 8, complètement engagé sur le porte-support 2, affleure à l'extrémité libre 11 de la matrice 2b. Le maintien en position du support PDC 8 est réalisé sans jeu fonctionnel (c'est-à-dire avec un jeu juste nécessaire pour permettre son engagement et son dégagement avec éventuellement un léger frottement mais sans réelle possibilité de mouvement radial du support par rapport au porte-support). La partie 9 de fixation à la peau comprend ici deux languettes 12, dépassant de part et d'autre de sa partie tubulaire 10, constituant des zones de soudure permettant la fixation du support PDC 8 à la peau.

Le support PDC 8 est orienté de manière que ses zones de soudure 12 se trouvent en regard des branches 4 de la sonotrode 5.

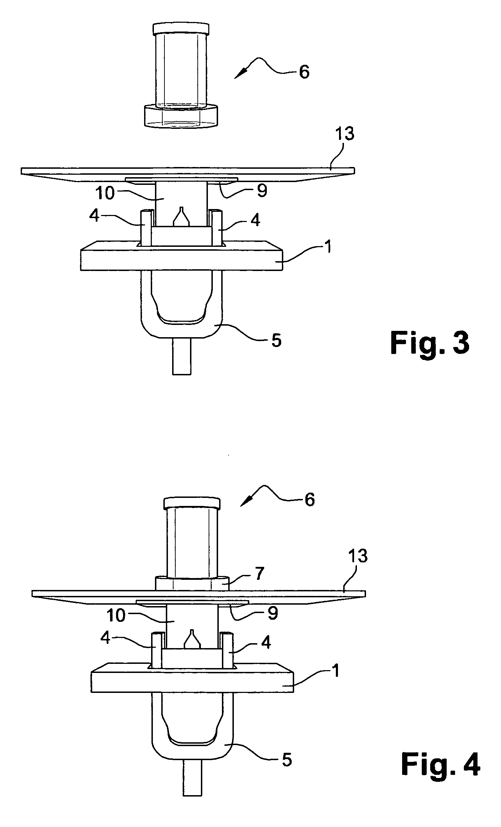

Sur la figure 3, on voit que la peau de pare-chocs 13, ici partiellement représentée par un rectangle bien qu'en réalité galbée, vient se positionner contre la partie plane 9 du support PDC 8.

Comme on le voit à la figure 4, le poinçon 6 est ensuite déplacé, avec son dévêtisseur 7, selon une translation axiale d'axe X, contre la face extérieure de la peau de pare-chocs 13, puis le poinçon 6 découpe la peau de pare-chocs pour former un orifice (non visible).

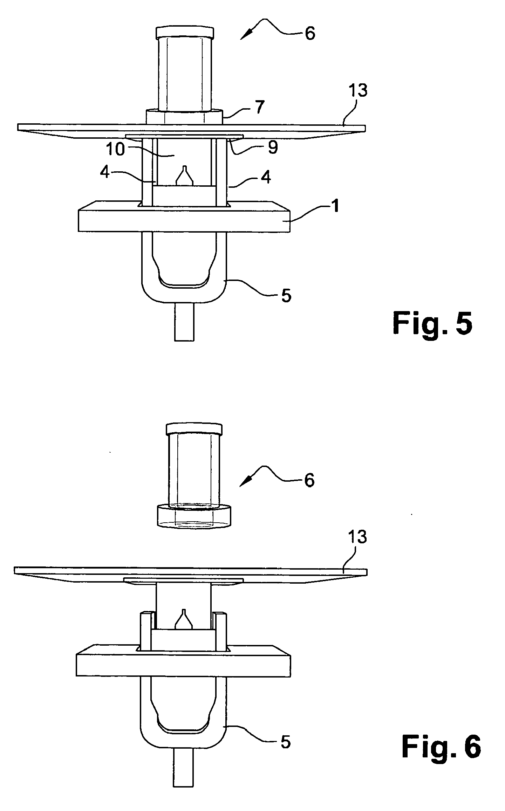

Lors d'une étape suivante, représentée à la figure 5 mais qui pourrait être concomitante, voire préalable, la sonotrode 5 vient au contact de la partie 9 de fixation du support PDC 8 et soude cette dernière à la peau de pare-chocs, en utilisant le dévêtisseur 7 comme enclume de soudure. A cet effet, le dévêtisseur peut être adapté en comportant une partie servant spécifiquement d'enclume.

Le support a donc conservé la même position par rapport à la peau pendant les opérations de poinçonnage et de fixation. En d'autres termes, le porte-support a maintenu le support dans sa position définitive par rapport à la peau.

Une fois ces deux opérations réalisées, le poinçon 6 et son dévêtisseur 7 reprennent leur position initiale de repos en s'écartant de la matrice 2b, ce qui permet de dégager la peau de pare-chocs de l'outillage. Les opérations de poinçonnage et de fixation du support PDC ont été réalisées sans transfert de la peau de pare-chocs d'un poste à un autre poste.

Il est bien entendu que le mode de réalisation qui vient d'être décrit ne présente aucun caractère limitatif et qu'il pourra recevoir toute modification désirable sans sortir pour cela du cadre de l'invention.

## Revendications

1. Outillage permettant la fixation d'un support (8) d'équipement sur une peau (13) en matière plastique d'une pièce de carrosserie de véhicule automobile, l'équipement étant du type devant être maintenu, par le support (8) fixé à la peau (13), en regard d'un orifice ménagé à cet effet dans ladite peau, l'outillage comprenant un poinçon (6), un dévêtisseur (7) dans lequel le poinçon peut coulisser et une matrice (2) dans laquelle le poinçon peut pénétrer pour découper la peau et former l'orifice, **caractérisé en ce que** :
- il comprend un porte-support (2), c'est-à-dire un organe conformé pour recevoir le support (8), engagé autour dudit porte-support (2), et pour le maintenir, du seul fait de cet engagement, dans sa position définitive par rapport à la peau (13),
- la matrice (2b) est une extrémité du porte-support (2) en regard du poinçon (6),
- l'outillage comprend des moyens de fixation (5, 7) pour fixer le support (2) à la peau (13) lorsqu'il est engagé sur le porte-support (2).

2. Outillage selon la revendication 1, dans lequel la matrice (2b) présente, dans un plan perpendiculaire à la direction de poinçonnage, une épaisseur de paroi comprise entre 1 et 8 mm, et de préférence entre 3 et 6 mm.

3. Outillage selon l'une quelconque des revendications précédentes, dans lequel les moyens de fixation du support (8) à la peau (13) comprennent une sonotrode (5) de soudure à ultrasons et une enclume, la sonotrode (5) étant voisine de la matrice (2), tandis que l'enclume est solidaire du dévêtisseur (7), voire est confondue avec le dévêtisseur (7).

4. Outillage selon l'une quelconque des revendications précédentes, dans lequel les moyens de fixation comprennent une ou plusieurs agrafes, une ou plusieurs vis, un ou plusieurs clips, ou encore un film adhésif pelable.

5. Outillage selon l'une quelconque des revendications précédentes, dans lequel le porte-support (2) est conformé pour recevoir et maintenir un support (8) de capteur PDC.

6. Outillage selon l'une quelconque des revendications précédentes, dans lequel le porte-support (2) est conformé pour recevoir et maintenir un support de lave-projecteur.

7. Procédé de fixation d'un support (8) d'équipement sur une peau (13) en matière plastique d'une pièce de carrosserie de véhicule automobile, l'équipement étant du type devant être maintenu, par le support (8) fixé à la peau, en regard d'un orifice ménagé à cet effet dans ladite peau, le procédé consistant à utiliser un poinçon (6), un dévêtisseur (7) dans lequel le poinçon peut coulisser et une matrice (2b) dans laquelle le poinçon peut pénétrer pour découper la peau et former l'orifice, **caractérisé en ce qu'**il consiste à exécuter les étapes suivantes :
a) positionner et maintenir le support dans sa position définitive par rapport à la peau,
b) réaliser l'orifice par poinçonnage de la peau après avoir exécuté l'étape a),
c) fixer le support à la peau après avoir exécuté l'étape a),
les étapes b) et c) étant réalisées concomitamment ou successivement, dans un ordre quelconque.

## Patentansprüche

1. Werkzeug zum Befestigen eines Ausstattungsträgers (8) an einer Haut (13) aus Kunststoff eines Teils einer Kraftfahrzeugkarosserie, wobei die Ausstattung des Typs ist, der, durch den an der Haut (13) befestigten Träger (8), in Bezug auf eine Öffnung, die zu diesem Zweck in der Haut ausgebildet ist, gehalten werden soll, wobei das Werkzeug einen Stempel (6), einen Abstreifer (7), in dem der Stempel gleiten kann, und ein Gesenk (2), in das der Stempel eindringen kann, um die Haut zu stanzen und die Öffnung zu bilden, aufweist, **dadurch gekennzeichnet, dass**
- es einen Trägerhalter (2) aufweist, das heißt, ein Organ, das ausgebildet ist, um den Träger (8), der um den Trägerhalter (2) herum in Eingriff ist, aufzunehmen und um ihn, allein aufgrund dieser Ineingriffnahme, in seiner endgültigen Position relativ zu der Haut (13) zu halten,
- das Gesenk (2b) ein Ende des Trägerhalters (2) dem Stempel (6) gegenüber ist,
- das Werkzeug Befestigungsmittel (5, 7) aufweist, um den Träger (2) an der Haut (13) zu befestigen, wenn er an dem Trägerhalter (2) in Eingriff ist.

2. Werkzeug nach Anspruch 1, wobei das Gesenk (2b), in einer zu der Stanzrichtung senkrechten Ebene, eine Wanddicke zwischen 1 und 8 mm und bevorzugt zwischen 3 und 6 mm aufweist.

3. Werkzeug nach einem der vorhergehenden Ansprüche, wobei die Mittel zum Befestigen des Trägers (8) an der Haut (13) eine Sonotrode (5) zum Ultraschall-Schweißen und einen Amboss aufweist, wobei die Sonotrode (5) dem Gesenk (2) benachbart ist, während der Amboss mit dem Abstreifer (7) fest verbunden ist oder sogar mit dem Abstreifer (7) zusammenfällt.

4. Werkzeug nach einem der vorhergehenden Ansprüche, wobei die Befestigungsmittel eine oder mehrere Klammern, eine oder mehrere Schrauben, einen oder mehrere Clips oder auch einen abziehbaren Klebefilm aufweisen.

5. Werkzeug nach einem der vorhergehenden Ansprüche, wobei der Trägerhalter (2) dafür ausgebildet ist, einen Träger (8) für einen PDC-Sensor aufzunehmen und zu halten.

6. Werkzeug nach einem der vorhergehenden Ansprüche, wobei der Trägerhalter (2) dafür ausgebildet ist, einen Träger für eine Scheinwerferreinigungsanlage aufzunehmen und zu halten.

7. Verfahren zum Befestigen eines Ausstattungsträgers (8) an einer Haut (13) aus Kunststoff eines Teils einer Kraftfahrzeugkarosserie, wobei die Ausstattung des Typs ist, der, durch den an der Haut befestigten Träger (8), in Bezug auf eine Öffnung, die zu diesem Zweck in der Haut ausgebildet ist, gehalten werden soll, wobei das Verfahren darin besteht, einen Stempel (6), einen Abstreifer (7), in dem der Stempel gleiten kann, und ein Gesenk (2b), in das der Stempel eindringen kann, um die Haut zu stanzen und die Öffnung zu bilden, zu verwenden, **dadurch gekennzeichnet, dass** es darin besteht, die folgenden Schritte auszuführen:
a) Positionieren und Halten des Trägers in seiner endgültigen Position relativ zu der Haut,
b) Realisieren der Öffnung durch Stanzen der Haut, nachdem Schritt a) ausgeführt wurde,
c) Befestigen des Trägers an der Haut, nachdem Schritt a) ausgeführt wurde,
wobei die Schritte b) und c) gleichzeitig oder nacheinander, in einer beliebigen Reihenfolge, ausgeführt werden.

## Claims

1. Tooling for fastening an equipment support (8) on a plastics material skin (13) of a motor vehicle bodywork part, the equipment being of the type that is to be held by the support (8) fastened to the skin (13) so as to face an orifice provided for this purpose in said skin, the tooling comprising a punch (6), a stripper (7) in which the punch can slide, and a die (2b) in which the punch can penetrate in order to cut the skin and form the orifice, **characterized in that**:
• it includes a support carrier (2), i.e. a member that is shaped to receive the support (8) engaged around said support carrier (2), and to hold it merely as a result of said engagement in its final position relative to the skin (13);
• the die (2b) is an end of the support carrier (2) facing the punch (6); and
• the tooling includes fastener means (5, 7) for fastening the support (8) to the skin (13) when engaged on the support carrier (2).

2. Tooling according to claim 1, wherein the die (2b) presents, in a plane perpendicular to the punching direction, a wall thickness ranging from 1 mm to 8 mm, and preferably ranging from 3 mm to 6 mm.

3. Tooling according to any one of the preceding claims, wherein the fastener means for fastening the support (8) to the skin (13) comprise a sonotrode (5) for ultrasound welding and an anvil, the sonotrode (5) being adjacent to the die (2b), while the anvil is secured to the stripper (7) or is merged with the stripper (7).

4. Tooling according to any one of the preceding claims, wherein the fastener means comprise one or more staples, one or more screws, one or more clips, or indeed a peelable adhesive film.

5. Tooling according to any one of the preceding claims, wherein the support carrier (2) is shaped to receive and hold a PDC sensor support (8).

6. Tooling according to any one of the preceding claims, wherein the support carrier (2) is shaped to receive and hold a headlight-washer support.

7. Method of fastening an equipment support (8) to a plastics material skin (13) of a motor vehicle bodywork part, the equipment being of the type that is to be held by the support (8) fastened to the skin so as to face an orifice provided for this purpose in said skin, the method consisting in using a punch (6), a stripper (7) in which the punch can slide, and a die (2b) into which the punch can penetrate in order to cut the skin and form the orifice, **characterized in that** it consists in executing the following steps:
a) positioning and holding the support in its final position relative to the skin;
b) making the orifice by punching the skin after executing step a); and
c) fastening the support to the skin after executing step a);
steps b) and c) being performed simultaeously or in succession, in either order.
